**Europäisches Patentamt**

**European Patent Office**

**Office européen des brevets**

(19)

(11) Publication number: **0 135 204**
**A2**

(12) # EUROPEAN PATENT APPLICATION

(21) Application number: **84200818.7**

(22) Date of filing: **08.06.84**

(51) Int. Cl.⁴: **G 01 N 27/82**

(30) Priority: **15.06.83 IT 2163683**

(43) Date of publication of application:
**27.03.85 Bulletin 85/13**

(84) Designated Contracting States:
**AT BE CH DE FR GB LI LU NL SE**

(71) Applicant: **CISE- Centro Informazioni Studi Esperienze S.p.A.**
**Via Carducci, 14**
**I-20123 Milano(IT)**

(72) Inventor: **Caruso, Eugenio**
**Via Catalani 58**
**I-20131 Milano(IT)**

(72) Inventor: **Gray, Antonio**
**Via 1o Maggio 22**
**I-20090 Segrate Milan(IT)**

(74) Representative: **Martegani, Franco et al,**
**Ing. Barzanò & Zanardo S.p.A. Via Borgonuovo, 10**
**I-20121 Milano(IT)**

(54) Measuring device for surface and subsurface defects in metal bodies above the Curie temperature.

(57) The sensor is constituted by a magnetic core with pole pieces and by an electric coil wound on the body of said core. With said coil there are associated a sinusoidal current generator and impedance measurement means. A processor determines the presence of surface and subsurface defects in metal bodies above the Curie temperature.

Fig.1

Croydon Printing Company Ltd

MEASURING DEVICE FOR SURFACE AND SUBSURFACE DEFECTS IN METAL BODIES ABOVE THE CURIE TEMPERATURE.

This invention relates to a surface and subsurface defect sensor for conductive bodies at a temperature greater than the Curie temperature.

Measurements of this kind are at present made by the normal diagnostic methods involving skin eddy currents (excited by high frequency inductors), and therefore have the drawback of a thin analysis zone.

According to the invention this object is attained by a measuring device characterised by comprising a sensor constituted by a core with pole pieces which can be made to approach the wall to be examined and by an electric coil wound on the body of said core, means for supplying an alternative current to said coil, means for measuring the impedance of said coil, and processing means for determining the presence of defects from the measured value of said impedance.

If the metal alloy of the body being measured is above the Curie temperature, it is no longer in a ferromagnetic state (nor contains ferromagnetic phases or precipitates), but instead is in a dia or paramagnetic state. The absence of ferromagnetism enables the lines of force of the magnetic field to penetrate into the material. The high temperature means that the metal alloy has a sufficiently high electrical resistivity to limit the dissipation of the magnetic field energy by the eddy current effect, and thus ensure good penetration of the alternating magnetic field.

The characteristics of the present invention will be apparent by reference, by way of example, to the accompanying drawings in which:

Figure 1 shows the basic scheme of a sensor according to the invention;

Figure 2 shows the equivalent magnetic circuit of said sensor, in combination with the wall subjected to examination for the presence of defects;

Figures 3, 4 and 5 are diagrams of three possible examples of circuit arrangements suitable for feeding the coil, measuring its impedance and processing the measurement;

Figure 6 shows the basic scheme of a different type of sensor for a measuring device according to the invention; and

Figure 7 shows a different method for mounting the coils in a sensor for a measuring device according to the invention.

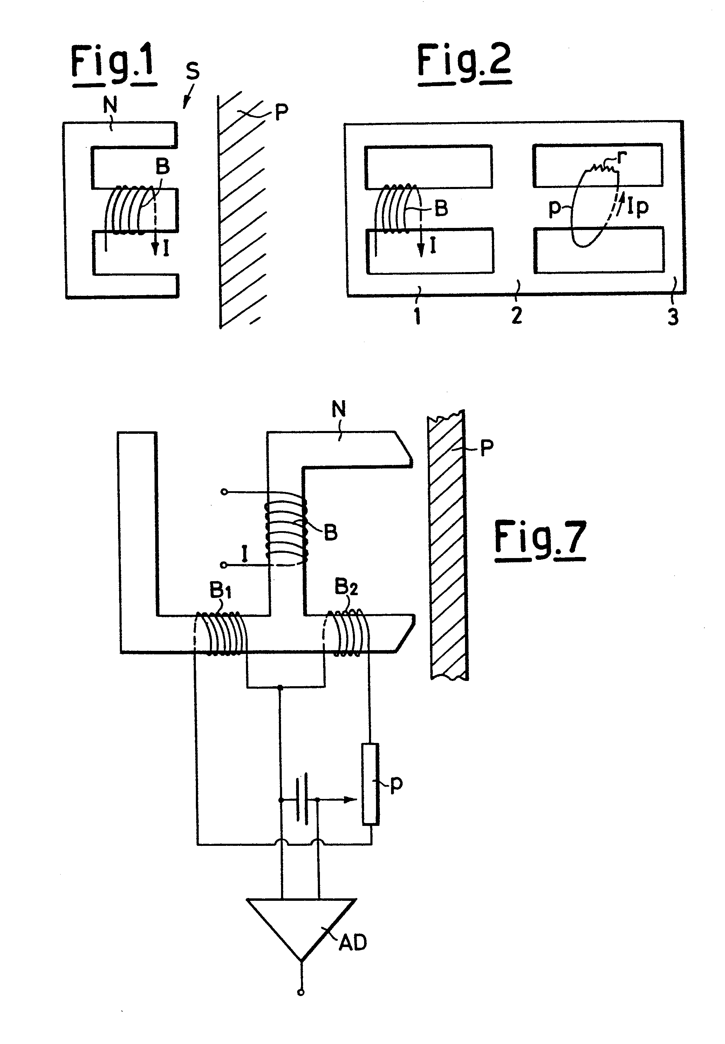

Figure 1 shows a sensor S constituted by a ferromagnetic coil N (of E shape), the pole pieces of which face the conductive wall P to be measured and are disposed a short distance therefrom. On the central portion of the ferromagnetic core N there is wound a coil B, which is fed with sinusoidal current I and has a measurable impedance Z.

This described assembly corresponds to the equivalent magnetic circuit of Figure 2, which comprises a branch 1 equivalent to the ferromagnetic core N, a branch 2 equivalent to the passage through air of the magnetic flux between the core N and wall P, and a branch 3 equivalent to the passage in the wall P.

The three said branches are characterised by different values of magnetic reluctance, ie:

- in the branch 1 there is a reluctance $R_1$, which is negligible compared with the other two because of the high premeability of the ferromagnetic material which constitutes the core N;

- in the branch 2 there is a reluctance $R_2$, which is determined by the air upstream of the wall P;

- in the branch 3 there is a reluctance $R_3$, which is determined by the wall P.

The turns of the coil B, which are n in number, are linked with the branch 1, whereas one turn p is to be considered linked with the third branch, to represent the conductive wall P, which has a resistance r proportional to the resistivity of its constituent material.

In a situation of this kind, feeding the coil B with a sinusoidal current I of angular frequency $\omega$ gives rise to a magnetomotive force

$$f.m.m. = n\,I$$

to which there corresponds in the branch 1 a magnetic flux

$$\emptyset_1 = \emptyset_2 + \emptyset_3$$

where $\emptyset_2$ and $\emptyset_3$ represent the contributions provided by the fluxes present in the branches 2 and 3 respectively.

Whereas $\emptyset_2$ can be calculated by considering only the reluctance $R_2$, ie

$$\emptyset_2 = n\,I/R_2$$

the flux $\emptyset_3$ also depends on the current Ip induced in the conductive wall P (and thus in the turn p with resistance r), ie

$$\emptyset_3 = (n\,I - I_p)/R_3$$

The current $I_p$ itself depends on the derivative of $\emptyset_3$ with respect to time, and on the resistance r offered by the wall P. Using vectorial notation:

$$I_p = j\omega\phi_3/r$$

from which, using the previous equation:

$$\phi_3 = \frac{n\,I/R_3}{1 + j\omega/rR_3}$$

The voltage V applied across the coil B can be calculated thus:

$$V = j\omega\phi_1 n = j\omega n(nI/R_2 + \frac{nI/R_3}{1 + j\omega/rR_3})$$

It follows that the impedance Z of the coil B is given by the equation:

$$Z = \frac{V}{I} = j\omega L(1 - \frac{\alpha(\omega^2\tau^2)}{1 + \omega^2\tau^2}) + \frac{\alpha\omega^2\tau}{1 + \omega^2\tau^2}L \qquad (1)$$

in which the following parameters have been introduced:

$$\alpha = \frac{R_2}{R_2 + R_3} \quad ; \quad L = n^2(\frac{1}{R_2} + \frac{1}{R_3}); \quad \tau = \frac{1}{rR_3}$$

where $\alpha$ depends on the ratio of the reluctance of the magnetic paths upstream of the wall P to the reluctance external to the core and thus depends on the distance between the sensor and the wall, L is equal to the inductance of the coil B in the absence of the conductive wall, and T is a constant proportional to the inverse of the resistance presented by said wall.

The above relationship (1) makes it possible to obtain the required identification of the defect from the measurement of the impedance Z of the coil B, by introducing the sensor-wall distance parameter as described hereinafter.

For this purpose it is possible to operate in one of the following ways:

A)  By obtaining an independent measure of the sensor-wall distance, for example by means of capacitive, optical, microwave or other sensors, the presence of a defect in the material can be identified by measuring one of the following constituent parameters of the impedance Z of the coil B:

a)  the modulus of the coil impedance

$$Z = \frac{\omega L}{1 + \omega^2 \tau^2} \sqrt{1 + \omega^2 \tau^2 [1 + \omega^2 \tau^2 (\alpha - 1)^2 + 1]} \qquad (2)$$

b)  the real part of the coil impedance

$$Z_r = \frac{\alpha \omega^2 \tau}{1 + \omega^2 \tau^2} \cdot L \qquad (3)$$

c)  the coefficient of the imaginary part of the coil impedance

$$Z_i = (1 - \frac{\alpha \omega^2 \tau^2}{1 + \omega^2 \tau^2}) \omega L \qquad (4)$$

The parameter $K = \omega \tau$ is an index of the magnetic field penetration through the wall P.  The smaller the value of K the greater the transparency.  In this respect, for penetration to be good, the impedance of the third branch $\omega / R_3$ must be less than the resistance r of the equivalent turn:

$$\frac{\omega}{R_3} < r \qquad \text{and thus}$$

$$K = \omega \tau < 1$$

The relationship is satisfied the smaller the value of $\tau$.  As $\tau = 1/r R_3$, it is necessary for r to be large, this condition being satisfied when the material is at high temperature.

By introducing a first order approximation, the real part of the

impedance becomes (where $\omega\tau \ll 1$):

$$Z_r = \alpha \, \omega^2 \tau L \qquad\qquad (5)$$

with a very strong dependence $(1/r)$ on the presence of the wall. From each of the expressions 2, 3, 4, 5, the value of L being known and having found the values of $R_2$ and $R_3$, it is possible, from a knowledge of the sensor-wall distance and using theoretical calculations and tables of theoretical or experimental origin, to obtain the value of r and thus identify the presence of a defect, as the average resistivity of the wall P is known. The method can be substantially considered as a method for measuring local resistivity. The presence of a defect is in this respect manifested by a localised resistivity increase.

B)    Simultaneous measurements are made of the impedance of the coil B, these measurements providing its real part and imaginary part, as indicated heretofore.

These measurements can be processed in the following ways:

a)    by comparing them with experimental tables which provide information on the presence of defects and the sensor-wall distance;

b)    by calculating the expression:

$$\frac{(\omega L - Z_i)^2}{Z_r^2 + (\omega L - Z_i)^2} = \frac{\omega^2 \tau^2}{1 + \omega^2 \tau^2}$$

which is dependent on $1/r$ and independent of the ratio $R_2/(R_2 + R_3)$ and hence of the sensor-wall distance.

C)    The voltage signal $j\omega L I$, present across the coil B when the conductive wall P is absent, is subtracted from the voltage measured when the wall is present, and the phase difference $\theta$ between the resultant signal and the current fed to the coil is

0135204

measured.

This phase difference is given by

$$\theta = \arcsin \frac{(\omega L - Z_i)}{\sqrt{(\omega L - Z_i)^2 + Z_r^2}}$$

from which

$$\sqrt{\frac{\omega^2 T^2}{1 + \omega^2 T^2}} = \sin\theta$$

from which it is possible to deduce the presence of a defect once the sensor-wall distance is known.

D) Several coil impedance measurements are made at different frequencies. In this respect, the magnetic fields at lower frequencies enter the material and are used to identify defects, whereas those at higher frequencies are more sensitive to the sensor-wall distance as a consequence of the skin effect, which limits magnetic flux penetration into the conductors at high frequency. The sensor-wall distance can be obtained by suitable mathematical manipulation or by using tables.

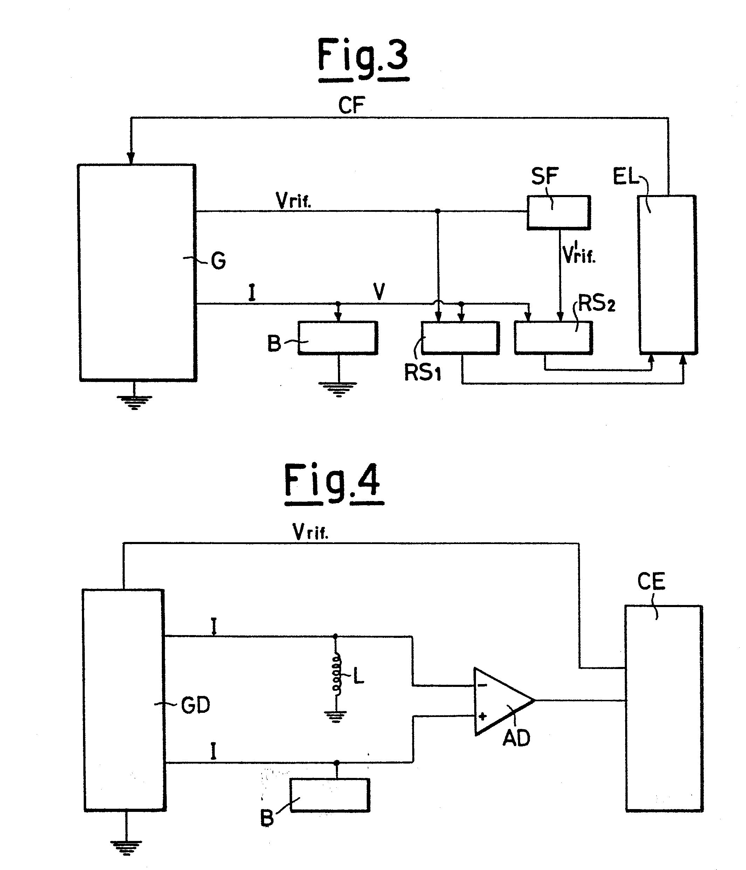

To employ the methods explained in the preceding paragraphs A, B and D, the circuit arrangement illustrated in Figure 3 can be used, which is shown and described here by way of non-limiting example. In said figure, it can be seen that a generator G generating sinusoidal current of angular frequency $\omega$ feeds the current I to the sensor coil B, and a reference voltage $V_{rif}$, which a phase shifter SF shifts through 90° so that it becomes $V'_{rif}$. The voltage V across the coil B, which indicates the impedance of this latter, is rectified by two synchronous detectors $RS_1$ and $RS_2$ which are piloted by the reference voltages $V_{rif}$ and $V'_{rif}$ respectively, and the relative outputs are fed to a processor EL which, in accordance with the proposed methods, is able to simulate the presence of a defect. If measurements at different frequencies are required, the processor EL can control the frequency of the sinusoidal generator G by means of a frequency control signal CF.

In the case of the method described in the preceding paragraph C it is advisable to use the circuit arrangement of Figure 4, in which a double sinusoidal generator GD feeds two identical currents I to the sensor coil B and to an inductor L having a coefficient equal to that of the coil when the wall is absent. The difference between the two resultant voltage signals, which is obtained by means of a differential amplifier AD, is then compared, with regard to the phase, with a reference signal $V_{rif}$ provided by the generator GD. This phase comparison is made by a phase comparator and processor CE, by means of which the information relating to the presence of a defect can be obtained.

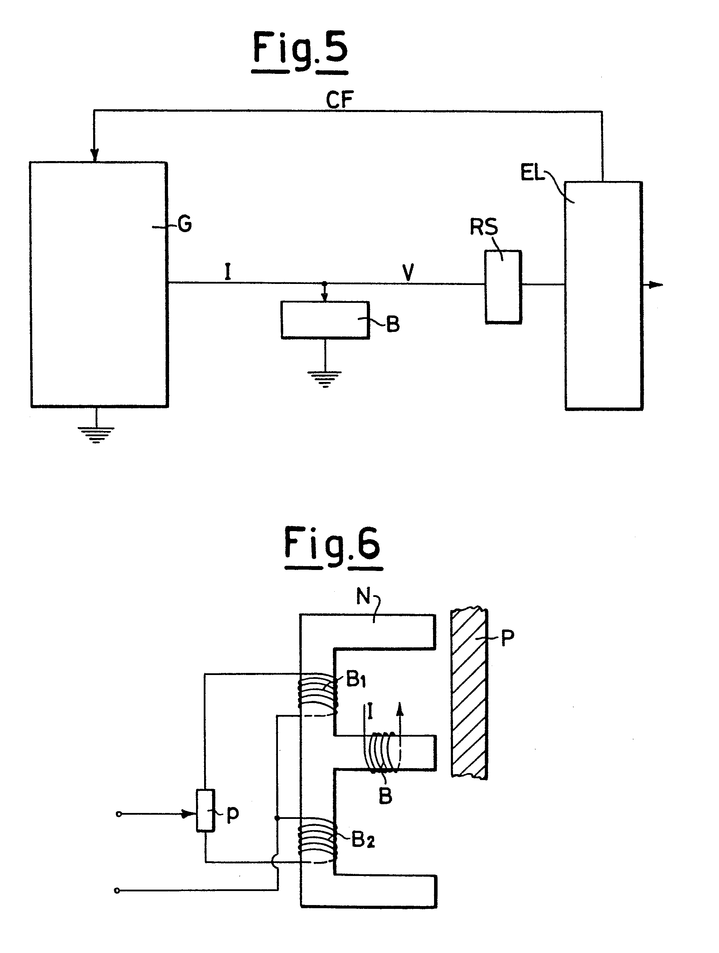

When employing method A, and wishing to use only the modulus value of the impedance Z it is possible to use the more simple circuit arrangement shown in Figure 5. A generator G generating sinusoidal current with angular frequency $\omega$ feeds current I to the sensor coil B. The voltage V across the coil B, which is indicative of the impedance of this latter, is rectified by RS and fed to a processor EL able to identify the presence of surface defects.

Instead of being constituted by a single coil which operates both as an exciter element and as an inductance, the impedance variations of which are measured, the sensor can be constructed differently in order to improve the signal/noise ratio and stability, and to simplify the electrical circuits.

Figure 6 shows the basic scheme of said sensor. An exciter coil B and two measurement coils $B_1$ and $B_2$ connected into a Wheatstone bridge are wound on a core. A potentiometer p enables the bridge to be zeroed when the input to be measured is absent.

Figure 7 shows a different coil assembly scheme which has been tested experimentally and gives optimum performance. The core is Ч -shaped, the exciter coil B being mounted on the vertical central branch and the two bridge coils $B_1$ and $B_2$ being mounted on the adjacent horizontal branches of the Ч .

In all cases, whatever the type of sensor used, the sensor should be cooled and protected from flames and fumes which may accompany the material to be measured. Although the description has referred heretofore to the measurement of a flat wall, it is possible to measure bodies of different shapes by analogous methods.

CLAIMS

1.    A measuring device for identifying defects in materials above the Curie temperature, characterised by comprising a sensor constituted by a magnetic core with pole pieces which can be made to approach the wall to be examined and by an electric coil wound on the body of said core, means for supplying a sinusoidal current to said coil, means for measuring the impedance of said coil, and processing means for obtaining information on the presence of defects from the measured value of said impedance.

2.    A measuring device as claimed in claim 1, characterised in that said core is either of ferromagnetic material or not , or air.

3.    A measuring device as claimed in claim 1, characterised in that said means for supplying a sinusoidal current comprise a sinusoidal generator able to provide the sinusoidal feed current for the coil and to provide a reference voltage, and said impedance measurement means comprise two synchronous detectors able to rectify the voltage developed across the coil in accordance respectively with said reference voltage and with a voltage the phase of which is shifted through 90° relative to said reference voltage, the outputs of said detectors being fed to a processor.

4.    A measuring device as claimed in claim 1, characterised in that said means for supplying a sinusoidal current comprise a double sinusoidal generator able to provide the sinusoidal feed current for the coil and to provide an identical feed current for an inductor having a coefficient equal to that of the coil when the wall is absent, and said impedance measurement means comprise a differential amplifier able to obtain the difference between the two resultant voltages and a phase comparator able to make a phase comparison between said difference and a reference voltage provided by said generator.

5. A measuring device as claimed in claim 1, characterised in that said means for supplying a sinusoidal current comprise a sinusoidal generator able to provide the sinusoidal feed current for the coil, and said impedance measurement means comprise a detector able to rectify the voltage developed across the coil; the output of said detector being fed to a processor for the identification of defects.

6. A measuring device as claimed in claims 3 to 5, characterised in that the frequency of the sinusoidal current generator can be varied as a function of the thickness of the material to be examined.

7. A measuring device as claimed in claim 1, characterised by being cooled, and protected from the flames and fumes which are present during the measurement.

8. A measuring device as claimed in claim 1, characterised in that the magnetic core or the coil can be of any shape, such as C shape, E shape, erotation shape, ⊔ shape, I shape.

9. A measuring device as claimed in claim 1, characterised by comprising more than one winding, which are separate or in the form of an autotransformer.

10. A measuring device as claimed in claim 1, characterised in that the sensor is constituted by an exciter coil and two secondary measurement coils constituting two branches of a Wheatstone bridge.

11.   A measuring device as claimed in claims 1 and 10, characterised in that the two measurement coils are obtained from the exciter coil by means of an autotransformer tap.

12.   A measuring device as claimed in claims 1 and 10, characterised in that the core is of $\sqcup$ shape, and the exciter coil is mounted on the central branch and the two bridge coils are mounted on the adjacent vertical branches of the $\sqcup$ .

13.   A measuring device as claimed in claim 1, characterised in that the information relating to the presence of defects is obtained from the modulus and/or from the real part and/or from the imaginary part of the voltage across the coil, while this latter is fed by a current-controlled generator.

14.   A measuring device as claimed in claim 1, characterised by being able to make measurements in short time periods of down to 1 ms.

15.   A measuring device as claimed in claims 1 to 13, able to determine the distance between the measuring device itself and the wall of the material subjected to measurement.

16.   A measuring device as claimed in claim 15, characterised in that the signal dependent on the sensor-wall distance is obtained by the use of a second higher frequency (either simultaneous or not simultaneous with the first).

17.   A measuring device as claimed in claim 15, characterised in that the sensor-wall distance is deduced from two of the three components (modulus, real part and imaginary part) of the inductance.

- 4 -    0135204

18.    A measuring device as claimed in claim 1, characterised in that the sensor-wall distance is measured independently by a further sensor (capacitive, optical, microwave, eddy current.)

19.    A measuring device as claimed in claims 1 to 18, characterised by being used for identifying the presence of defects in tubes of ferrous material above the Curie temperature, the tube being either at rest or moving relative to the sensor.

20.    A measuring device as claimed in claims 1 to 18, characterised by being used for identifying the presence of defects in ferrous plate above the Curie temperature, the plate being either at rest or moving relative to the sensor.

21.    A measuring device as claimed in claims 1 to 18, characterised by being used for identifying the presence of defects in ferrous rod above the Curie temperature, the rod being either at rest or moving relative to the sensor.

22.    A measuring device as claimed in claims 1 to 18, characterised by being used for identifying the presence of defects in ferrous slabs above the Curie temperature, these being either at rest or moving relative to the sensor.

23.    A measuring device as claimed in claim 22, characterised in that one or more sensors facing a ferrous plate above the Curie temperature are able to determine the transverse profile and/or the planarity of said plate.

24.    A sensor device characterised in that the sensor is the inductive part of an oscillating circuit whose self frequency variation is measured to detect defects.

# Fig.1

# Fig.2

# Fig.7

0135204

# Fig.3

# Fig.4

# Fig.5

# Fig.6